# EUROPÄISCHE PATENTSCHRIFT

(11) **EP 1 692 769 B1**
(45) Veröffentlichungstag und Bekanntmachung des Hinweises auf die Patenterteilung: **03.11.2010**
(21) Anmeldenummer: 04803275.9
(22) Anmeldetag: 25.11.2004
(51) Int. Cl.: G06K 9/38, G06K 9/00, H03M 1/06

(54) **DIGITALISIEREN EINER PAPILLARSTRUKTUR**
DIGITIZING A PAPILLARY STRUCTURE
DIGITALISIERUNG EINER PAPILLARSTRUKTUR

(30) Priorität: 02.12.2003 DE 10356147
(43) Veröffentlichungstag der Anmeldung: 23.08.2006
(73) Patentinhaber: Giesecke & Devrient GmbH, 81677 München (DE)
(72) Erfinder: BARTSCH, Armin, 82194 Gröbenzell (DE); STEPHAN, Elmar, 80339 München (DE)
(74) Vertreter: Klunker . Schmitt-Nilson . Hirsch
(86) Internationale Anmeldenummer: PCT/EP2004/013385
(87) Internationale Veröffentlichungsnummer: WO 2005/055429

(56) Entgegenhaltungen:
- US-A- 4 393 372
- US-A- 6 028 543
- US-B1- 6 259 804
- MORIMURA H ET AL: "A pixel-level automatic calibration circuit scheme for sensing initialization of a capacitive fingerprint sensor LSI" 2001 SYMPOSIUM ON VLSI CIRCUITS. DIGEST OF TECHNICAL PAPERS. KYOTO, JAPAN, JUNE 14 - 16, 2001, SYMPOSIUM ON VLSI CIRCUITS, TOKYO : JSAP, JP, 14. Juni 2001 (2001-06-14), Seiten 171-174, XP010551530 ISBN: 4-89114-014-3
- KHALID SAYOOD: "Introduction to Data Compression" 2000, MORGAN KAUFMANN , SAN FRANCISCO 226380 , XP002324270 ISBN: 1-55860-558-4 Chapter 8: Scalar Quantization
- "Lexikon, Fachgebietsabonnement Physik und Technik" [Online] 12. April 2005 (2005-04-12), ELSEVIER/SPEKTRUM AKADEMISCHER VERLAG , HEIDELBERG , XP002324271 Gefunden im Internet: URL:http://www.wissenschaft-online.de/abo/ lexikon/physik/492> [gefunden am 2005-04-12] das ganze Dokument

## Beschreibung

Die Erfindung betrifft ein Verfahren und eine Vorrichtung zum Digitalisieren zumindest einer Teilfläche der Papillarstruktur der Haut, insbesondere eines Fingerabdrucks, mit hoher Intensitätsauflösung.

Verfahren und Vorrichtungen dieser Art sind auf vielfältige Weise gewerblich einsetzbar, beispielsweise bei der biometrischen Identifikation von Personen oder der Zugangskontrolle zu gesicherten Räumen, z. B. in Firmen, Flughäfen oder sonstigen sicherheitskritischen Gebäuden.

US 6,259,804 B1 offenbart einen Fingerabdrucksensor, der ein Feld von Fingerabdrucksensorelementen, Analog/ Digital-Wandler mit einem regelbaren Bereich, einen Scanner um sequentielle A/ D-Wandlungen von vorbestimmten Fingerabdrucksensorelementen durchzuführen und eine Schaltung zum Bestimmen und Einstellen des Bereichs des A/ D-Wandlers um den Bereich des A/ D-Wandlers basierend auf vorhergehenden A/ D-Wandlungen einzustellen um eine verbesserte Auflösung bei der Wandlung zu erreichen enthält. Eine Vielzahl von A/D-Wandlern wird vorzugsweise verwendet um gleichzeitig analoge Signale von einer entsprechenden Vielzahl von Fingerabdrucksensorelementen zu wandeln. Die A/ D-Wandler können wenigstens einen Referenzspannungseingang aufweisen um das Einstellen eines ersten und zweiten Bereichspunkts zu ermöglichen. Die Schaltung zum Bestimmen und Einstellen des Bereichs kann ein Histogramm basierend auf vorhergehenden A/ D-Wandlungen erzeugen. Zusätzlich kann die Schaltung zum Bestimmen und Einstellen des Bereichs einen vorgegebenen Bereich für die erste Erfassung mittels der Fingerabdrucksensorelemente einstellen.

US 4,393,372 offenbart einen parallelen Analog/Digital-Wandler, wobei die Spannung an den Eingängen der Vergleicher des Analog/Digital-Wandlers abwechselnd zwischen + ½ der Spannung entsprechend dem niederwertigsten Bit und - ½ der Spannung geschaltet wird. Eine bipolare Schaltung, welche einem Differenzverstärker ähnlich ist, weist einen Widerstand auf, welcher die Kollektoren der zwei Transistoren des Differenzverstärkers und eine Konstantstromquelle, welche mit den Emittern der Transistoren verbunden ist, verbindet. Die Eingänge der Vergleicher sind über den Widerstand mit einem analogen Signal verbunden, während die Basis eines Transistors mit einem Taktsignal verbunden ist, welches die halbe Frequenz des Taktsignals des Wandlers aufweist.

US 6,028,543 offenbart ein Verfahren zur Verbesserung der Konvergenzgeschwindigkeit unterhalb der Genauigkeit und Präzision des niederwertigsten Bits in einem Mittelwertbilder für ein digitales Signal wenn die Messungen über viele Messungen gemittelt werden, wo das inhärente Signalrauschen klein ist verglichen mit einem niederwertigsten Bit. Eine gleitende Offset-Schaltung implementiert das Verfahren, welches die Offsets einem analogen Eingangssignal, das von einem analogen Sensor erhalten wird, hinzufügt. Die gleitende Offset-Schaltung kompensiert die Beschränkungen in der Auflösung eines Analog/ Digital-Wandlers, indem ein Offset unterhalb eines niederwertigsten Bits dem Eingangssignal hinzugefügt wird. Auf ähnliche Weise kompensiert die gleitende Offset-Schaltung die differentielle Nichtlinearität unter Verwendung eines Gatti-Offsets, welcher ein ganzzahliges Vielfaches der durchschnittlichen Spannungsbitbreite ist. Die Konvergenzgeschwindigkeit unterhalb der niederwertigsten Bit-Genauigkeit wird weiter erhöht indem nicht aufeinander folgende Inkremente verwendet werden.

Das Standardlehrbuch "Halbleiter-Schaltungstechnik" von U. Tietze und Chr. Schenk, ISBN 3-540-56184-6, veröffentlicht 1993 offenbart ferner allgemeines Fachwissen insbesondere hinsichtlich der Analog/Digital-Wandlung welches Prinzip genutzt wird und was bezüglich der Genauigkeit und Anwendung von Analog/Digital-Wandlern zu beachten ist.

Sensoren zum Digitalisieren von Fingerabdrücken besitzen bestimmte technische Grenzen für die Auflösung sowohl des Ortsbereichs als auch des Wertebereichs der Papillarstruktur eines Fingerabdrucks, wobei der Wertebereich je nach Aufnahmemodalität ein Helligkeits- bzw. Intensitätsbereich oder ein Farbbereich sein kann. Da bei den gängigen Farbräumen die Farben als Intensitätstupel verschiedener Spektralbereiche dargestellt werden, ist im folgenden mit dem Begriff "Intensität" gleichermaßen eine Helligkeits- wie eine Farbintensität gemeint.

Das Auflösungsvermögen eines Sensors bei der Abbildung eines natürlichen (kontinuierlichen) Intensitätsbereichs in die (diskreten) Graustufen eines digitalen Bildes ist aufgrund vielerlei technischer und natürlicher Rauschquellen (z. B. Quanten- oder Detektorrauschen) durch das Signal/RauschVerhältnis des Sensors beschränkt. Das heißt, das kleinste von dem Sensor auflösbare Intensitätsintervall hängt entscheidend von dem Signal/RauschVerhältnis des verwendeten Sensors ab. Das sich daraus ergebende - theoretische - Intensitäts-Auflösungsvermögen begrenzt die bestmögliche Abtastung des vom Sensor zu erfassenden Intensitätsbereichs (Quantisierung) und bestimmt damit die zur Kodierung eines Intensitätswertes bei der Ana-log/Digital-Wandlung des Bildsignals maximal nötige Bitzahl (die Intensitäts- bzw. Farbtiefe).

Bei vielen Sensoren liegt jedoch die durch die Analog/Digital-Wandlung vorgegebene Intensitätsauflösung eines digitalen Bildsignals unterhalb derjenigen Intensitätsauflösung, die aufgrund des Signal/Rausch-Verhältnisses des Sensors möglich wäre. Diese nicht-optimale Quantisierung ist besonders bei der digitalen Aufnahme von z. B. Fingerabdruckbildern zum Zwecke der Archivierung und des digitalen Bildvergleichs von erheblichem Nachteil, da eine derartige technisch unnötige Beschränkung der Intensitätsauflösung gravierende Informationsverluste mit sich bringen kann, die dazu führen können, daß charakteristische Detailstrukturen eines Fingerabdrucks durch dessen digitale Aufnahme nicht erfaßt werden. Dieser Nachteil macht sich insbesondere bei aufzunehmenden Strukturen mit großer Intensitäts- bzw. Farbdynamik bemerkbar, da bei diesen ein einzelner diskreter Intensitätswert der digitalen Aufnahme ein großes kontinuierliches Intensitätsintervall der aufzunehmenden Struktur repräsentiert.

Um eine wenigstens teilweise verbesserte Intensitätsauflösung bereitzustellen, besitzen manche Sensoren eine eingeschränkte Empfindlichkeit, wodurch sie lediglich einen Ausschnitt des zu Verfügung stehenden Intensitätsbereichs erfassen. Dies ermöglicht zwar in dem betreffenden Ausschnitt eine erhöhte Intensitätsauflösung, jedoch befinden sich die Intensitäten jenseits des gewählten Ausschnitts im Sättigungsbereich des Sensors und werden deshalb nicht erfaßt. Alle Punkte des aufzunehmenden Objekts, deren reale Intensitätswerte nicht in dem Ausschnitt liegen, werden dann entweder auf den minimalen oder maximalen Intensitätswert des digitalen Bildsignals (d. h. dessen Sättigungswerte) abgebildet und verlieren somit ihre differenzierte Information. Derartige Sensoren sind bei der digitalen Aufnahme von Fingerabdruckbildern in der Regel nicht einsetzbar, da die Fingerabdrücke von verschiedenen Personen meist in höchst unterschiedlichen Intensitäts- und Farbbereichen zu finden sind und daher die volle Intensitäts-Dynamik erfaßt werden muß.

Bei vielen derartigen Sensoren sind bestimmte Aufnahmeparameter, wie z. B. der aufzunehmende Ausschnitt des Intensitätsbereichs oder der Kontrast des Bildes, einstellbar. Dadurch ist zwar prinzipiell eine Adaption an die Aufnahmebedingungen möglich, allerdings ist die Nachregelung der Aufnahmeparameter einerseits ein außerordentlich zeitaufwendiges Verfahren und führt andererseits nur mit erheblichem algorithmischen Aufwand zu der gewünschten Vergleichbarkeit aufgenommener Bilder mit archivierten Referenzbildern.

Natürlich könnten für den Zweck der digitalen Aufnahme von Fingerabdruckbildern auch Sensoren mit einer ausreichend hohen Intensitätsauflösung verwendet werden, diese haben aber gegenüber herkömmlichen Sensoren den Nachteil teilweise erheblich höherer Kosten.

Demzufolge liegt der vorliegenden Erfindung die Aufgabe zugrunde, auf einfache und preisgünstige Art und Weise die Digitalisierungsergebnisse von Sensoren zu verbessern, die ein zu digitalisierendes Bild mit einer geringen Intensitäts- bzw. Farbauflösung abtasten.

Diese Aufgabe wird erfindungsgemäß durch ein Verfahren und eine Vorrichtung mit den Merkmalen der unabhängigen Ansprüche gelöst. In davon abhängigen Ansprüchen sind vorteilhafte Ausgestaltungen und Weiterbildungen der Erfindung angegeben.

Die Aufnahme und Digitalisierung von Gegenständen und Objekten vollzieht sich in der Regel in zwei Schritten: Zunächst wird ein physikalisches Signal (z. B. der sich aus der Papillarstruktur eines Fingerabdruckprofils ergebende lokale Kontrast oder beliebige andere elektromagnetische Signale) in ein analoges elektrisches Signal transformiert, welches anschließend mittels eines Analog/Digital-Wandlers (A/D-Wandler) in ein digitales Signal transformiert wird. Bei der A/ D-Wandlung werden sowohl der kontinuierliche Ortsbereich als auch der kontinuierliche Intensitätsbereich des analogen Signals auf beschränkte Bereiche abgebildet, die eine endliche Anzahl von diskreten Werten besitzen. Es findet also eine Orts- und eine Intensitätsdiskretisierung statt, wobei letztere auch als Quantisierung bezeichnet wird.

Bei der digitalen Aufnahme von Fingerabdrücken wird das Intensitätsprofil einer bestimmten Teilfläche der Papillarstruktur der Haut mittels geeigneter Sensoren aufgenommen. Dabei wird der kontinuierliche Intensitätsbereich des Intensitätsprofils oder ein Ausschnitt dieses Intensitätsbereichs diskretisiert und durch endlich viele diskrete Intensitätswerte des digitalen Bildes repräsentiert. Ein digitales 8-Bit-Bild besitzt beispielsweise 256 diskrete Intensitätswerte, die jeder ein bestimmtes kontinuierliches Intensitätsintervall repräsentieren.

Erfindungsgemäß werden von einem aufzunehmenden Fingerabdruck mehrere Aufnahmen gemacht, die alle die gleiche Teilfläche der Papillarstruktur der Haut abbilden und somit strukturell den gleichen Bildinhalt besitzen, sich aber in der Repräsentation dieses Inhalts durch diskrete Intensitätswerte quantitativ unterscheiden. Hierbei kann die Aufnahme weitgehend identischer Bildbereiche sehr einfach durch eine hohe Aufnahmefrequenz des Sensors sichergestellt werden, so daß Bewegungsartefakte weitestgehend ausgeschlossen sind.

Die unterschiedliche Darstellungsweise des mehrfach aufgenommenen Bildinhalts wird sichergestellt, indem jeweils verschiedene Intensitätsdiskretisierungen (Quantisierungen) durchgeführt werden. So kann beispielsweise der kontinuierliche Intensitätsbereich des Intensitätsprofils mit verschiedenen Auflösungen diskretisiert werden und/oder es können verschiedene Ausschnitte des kontinuierlichen Intensitätsbereichs anstelle des gesamten Bereichs diskretisiert werden.

Jedes einzelne dieser mehreren Bildsignale derselben Papillarteilfläche repräsentiert aufgrund seiner unterschiedlichen Intensitätsdiskretisierung eine spezifische Information über die tatsächliche (kontinuierliche) Intensitätsstruktur des aufgenommen Fingerabdruck-Profils, die sich zumindest teilweise von dem Informationsgehalt aller anderen Bildsignale dergleichen Papillarteilfläche unterscheidet. Durch eine bildpunktweise (pixelweise) Kombination aller dieser strukturell identischen digitalen Aufnahmen entsteht ein digitales Papillarstruktursignal, das die diskreten Intensitätsbereiche aller digitalen Bildsignale integriert und dadurch einen diskreten Intensitätsbereich mit erhöhter Auflösung für jeden diskreten Bildpunkt besitzt.

Der Vorteil dieses Verfahrens liegt darin, daß mit Hilfe herkömmlicher und preisgünstiger Sensoren eine Intensitätsauflösung bei der Digitalisierung erreicht wird, die die Intensitätsauflösung einzelner Bildsignale übersteigt und deren Qualität z. B. für den Zweck der digitalen Aufnahme von Fingerabdruckprofilen geeignet ist.

Bei den Variationen der Intensitätsdiskretisierung gibt es insbesondere die beiden folgenden prinzipiellen Möglichkeiten: Entweder können digitale Bildsignale erzeugt werden, deren diskrete Intensitätsbereiche unterschiedliche Ausschnitte des kontinuierlichen Intensitätsbereichs erfassen, oder es kann ein konstanter Intensitätsbereich des Intensitätsprofils erfaßt werden und dieser mit unterschiedlichen Anzahlen von diskreten Intensitätswerten dargestellt werden. Darüber hinaus ist es bei einem Hybridverfahren auch möglich, dass unterschiedliche Ausschnitte des kontinuierlichen Intensitätsbereichs auf jeweils unterschiedliche Anzahlen von diskreten Intensitätswerten der digitalen Einzelbilder abgebildet werden.

Die erstgenannte Ausführungsform besitzt den Vorteil, dass das digitale Papillarstruktursignal, das aus den Bildsignalen kombiniert wird, einen größeren Ausschnitt des kontinuierlichen Intensitätsbereichs des Fingerabdruckprofils abbildet als die Intensitätsbereiche der einzelnen Bildsignale, da sich die verschiedenen Ausschnitte zu einem größeren Ausschnitt ergänzen. Somit werden entsprechend größere Ausschnitte des kontinuierlichen Intensitätsbereichs der Papillarstruktur vorteilhaft mit der gleichen Intensitätsauflösung erfaßt, mit der bereits die entsprechend kleineren Ausschnitte der einzelnen Bildsignale erfaßt wurden. Insgesamt erhöht sich dadurch die Intensitätsauflösung des Papillarstruktursignals maximal um einen Faktor, der durch die Anzahl der Bildsignale bestimmt wird.

Um einen möglichst großen Ausschnitt des kontinuierlichen Intensitätsbereichs des Intensitätsprofils zu erfassen, ist es vorteilhaft, die von den einzelnen Bildsignalen erfaßten Ausschnitte so zu wählen, daß sie sich nicht überlappen. Um zusammenhängende Ausschnitte erfassen zu können, ist es ferner sinnvoll, daß die sich nicht überlappenden Ausschnitte der Bildsignale direkt aneinander anschließen. Vorteilhafterweise bilden diese sich nicht überlappenden und aneinander anschließenden Ausschnitte den gesamten kontinuierlichen Intensitätsbereich lückenlos ab. Insgesamt liegen die Vorteile der bisher beschriebenen, ersten Ausführungsform darin, daß die gesamte Intensitätsdynamik des Intensitätsprofils der Papillarstruktur erfasst werden kann und dadurch eine einfache Adaption an verschiedene Personen und Beleuchtungsverhältnisse möglich ist.

Bei einer vorteilhaften Ausgestaltung können sich die von den einzelnen Bildsignalen erfaßten Intensitätsbereichsausschnitte überlappen. Dieses Vorgehen hat besonders dann Vorteile, wenn innerhalb des kontinuierlichen Intensitätsbereichs des Fingerabdruckprofils wichtige diskriminative Merkmale des Fingerabdrucks in bestimmten Intensitätsbereichssegmenten auftreten, die dementsprechend zur optimalen Merkmalsextraktion mit einer hohen Intensitätsauflösung erfaßt werden müssen. Derartige Intensitätsbereichssegmente werden dann von verschiedenen Bildsignalen überlappend aufgenommen.

Falls sich also bei der Verwendung von zwei digitalen Bildsignalen die von deren diskreten Intensitätswerten repräsentierten kontinuierlichen Intensitätsintervalle überlappen, entstehen kleinere (z.B. größenmäßig halbierte) Intensitätsintervalle, die durch eigene, exaktere diskrete Intensitätswerte repräsentiert werden. Diese exakteren Intensitätswerte ergeben sich dann aus den beiden diskreten Intensitätswerten der sich überlappenden Intervalle. In diesem Fall verdoppelt sich die Intensitätsauflösung in den betreffenden Segmenten des kontinuierlichen Intensitätsbereichs. Dies ist besonders vorteilhaft, um diejenigen Segmente eines Intensitätsbereichs optimal zu erfassen, in denen sich die für die spätere Auswertung der digitalisierten Fingerabdruckprofile wichtigen lokalen Intensitätsmaxima und -minima befinden.

Bei einer erfindungsgemäßen Vorrichtung zur Digitalisierung wird der Ausschnitt des kontinuierlichen Intensitätsbereichs zur Intensitätsdiskretisierung von einer entsprechenden Steuereinrichtung bestimmt. Diese Steuereinrichtung kann bei der Bestimmung eines Intensitätsausschnittes prinzipiell an zwei verschiedenen Stellen im Digitalisierungsprozeß eingreifen. In einer bevorzugten Ausgestaltung der Erfindung wird ein Ausschnitt bereits bei der Transformation des (physikalischen) Intensitätsprofils in ein analoges elektrisches Signal spezifiziert, also über ein entsprechendes Steuersignal der Steuereinrichtung an den hierfür zuständigen Signalwandler. Andererseits kann gemäß einer alternativen Ausgestaltung der Ausschnitt erst im darauffolgenden Schritt der Analog/Digital-Wandlung mittels eines entsprechenden Steuersignals an den A/D-Wandler bestimmt werden.

Vorzugsweise wird ein kapazitiver Sensor eingesetzt, der aus einer Matrix von Kondensatorplatten besteht, auf denen eine bestimmte Ladungsmenge aufgebracht wird. Die Kondensatoren messen dann in Abhängigkeit von der aufgebrachten Ladungsmenge den lokalen Abstand zu dem als zweite Kondensatorplatte fungierenden Fingerabdruckprofil als ein proportionales Spannungssignal. Durch die Variierung der aufgebrachten Ladungsmenge kann der von dem Sensor erfaßte Ausschnitt des Intensitätsbereichs des Fingerabdruckprofils bestimmt werden. Neben kapazitiven Sensoren können in weiteren Ausführungsformen zu demselben Zweck z.B. auch optische Sensoren eingesetzt werden, beispielsweise CCD-Sensoren, deren Photodioden Lichtphotonen in ein elektrisches Signal umsetzen.

Bei der zweitgenannten Ausführungsform wird derselbe Intensitätsbereich des Fingerabdruckprofils durch mehrere digitale Bildsignale erfaßt und mit unterschiedlichen Anzahlen von diskreten Intensitätswerten, also unterschiedlichen Intensitätsauflösungen, dargestellt. Diese Ausführungsform besitzt den Vorteil, daß, analog zu dem bereits beschriebenen Effekt bei sich überlappenden Intensitätsausschnitten, der kontinuierliche Intensitätsbereich im aus den mehreren Bildsignalen kombinierten digitalen Papillarstruktursignal durch mehr diskrete Intensitätswerte repräsentiert wird als in den einzelnen digitalen Bildsignalen. Falls die durch die diskreten Intensitätswerte zweier Bildsignale repräsentierten kontinuierlichen Intensitätsintervalle keine echten Teilmengen bilden, verschieben sich die von den jeweiligen diskreten Intensitätswerten der einzelnen Bildsignale repräsentierten kontinuierlichen Intensitätsintervalle leicht gegeneinander und bilden Schnittbereiche.

Durch die Kombination der beiden bisher beschriebenen Ausführungsvarianten können in einer besonders vorteilhaften dritten Ausführungsform unterschiedliche Ausschnitte des kontinuierlichen Intensitätsbereichs mit jeweils unterschiedlicher Auflösung erfaßt werden. Die Intensitätsdiskretisierung wird dadurch besonders flexibel, da die Auflösung beliebiger Intensitätsintervalle gezielt eingestellt werden kann. Diese Einstellung der jeweils vorteilhaft zu wählenden Ausschnitte und Auflösungen wird von der Steuereinrichtung vorgenommen, die die Aufnahme und Digitalisierung der einzelnen Bildsignale steuert.

Das Zusammenführen aller Bildsignale zu einem Papillarstruktursignal mit erhöhter Intensitätsauflösung wird durch eine Kombinationseinrichtung realisiert. Dabei besitzen die diskreten Intensitätswerte der zu kombinierenden Bildsignale keinerlei Information mehr über die von ihnen tatsächlich repräsentierten kontinuierlichen Intensitätsintervalle. So besitzt z. B. ein digitales 8-Bit-Bild immer die Grauwerte 0 bis 255, unabhängig von dem von ihm tatsächlich erfassten kontinuierlichen Intensitätsausschnitt. Deshalb müssen für den Fall, daß die einzelnen Bildsignale lediglich Ausschnitte des Intensitätsbereichs des Fingerabdruckprofils erfassen, zur korrekten Kombination der digitalen Bildsignale deren Intensitätsbereiche in einem ersten Schritt auf den erfaßten kontinuierlichen Intensitätsausschnitt normiert werden.

In einem zweiten Schritt wird für jeden diskreten Bildpunkt des zu erzeugenden digitalen Papillarstruktursignals ein Intensitätswert geschätzt, der sich aus den Intensitätswerten der diskreten Bildpunkte der einzelnen Bildsignale ergibt, die sich an den jeweils mit dem entsprechenden Bildpunkt korrespondierenden Positionen befinden.

Eine Voraussetzung für diesen Schritt ist, daß die durch die einzelnen Bildsignale abgebildeten Teilflächen des Fingerabdruckprofils sich jeweils hinreichend genau überlagern, so daß einander entsprechende diskrete Bildpositionen der Bildsignale die jeweils gleichen Strukturen abbilden. Dies kann, bis auf einen obligatorischen Rauschanteil, durch eine entsprechend hohe Aufnahmefrequenz sichergestellt werden. Gleichwohl können kleinere Verschiebungen im Ortsbereich auch nachträglich algorithmisch kompensiert werden, beispielsweise durch Korrelationsoperationen im Orts- oder Frequenzbereich der digitalen Bildsignale.

Bei einer vorteilhaften Ausgestaltung wird der Schätzwert durch Bildung des arithmetischen Mittelwerts der entsprechenden Intensitätswerte der Einzelbildsignale errechnet. Dies hat den Vorteil, daß für das Papillarstruktursignal exaktere Intensitätswerte errechnet werden, in die die Intensitätswerte aller Bildsignale gleichberechtigt eingehen. Darüber hinaus sind jedoch auch andere Schätzverfahren denkbar, wie z. B. die gewichtete Mittelung, um beispielsweise hochaufgelösten Intensitätswerten bei der Schätzung ein größeres Gewicht zu verleihen.

Die bisher beschriebenen Verfahren können besonders vorteilhaft in einer erweiterten Ausführung auch zur Erzeugung von digitalen Farbbildern eines Fingerabdruckprofils mit erhöhter Farbauflösung eingesetzt werden. Dazu können spezielle Farbsensoren verwendet werden, die das Spektrum des sichtbaren Lichts gemäß bekannter additiver oder subtraktiver Farbräume (z. B. RGB, CMY) nach zu mischenden Grundfarben in Spektralbänder getrennt erfassen. Die von der Einstelleinrichtung zu bestimmenden Ausschnitte und Auflösungen der (in der Regel drei) kontinuierlichen Farbbereiche können unabhängig voneinander oder miteinander korreliert festgelegt werden. Das Zusammenführen der jeweiligen diskreten Farbbereiche der einzelnen Farb-Bildsignale zu jeweils einem Farbbereich des multispektralen Papillarstruktursignals durch die Kombinationseinrichtung wird dann in der Regel getrennt voneinander in der gleichen Weise wie das Zusammenführen von Intensitätsbereichen erfolgen. Die Verwendung von zwei Farb-Bildsignalen mit je drei Spektralbändern würde dann im optimalen Fall eine 2³=8-fach verbesserte Farbauflösung des Pappilarstruktur-Farbsignals zur Folge haben. Dieses Verfahren ist darüber hinaus für viele weitere Farbräume einsetzbar (z. B. HSV und HLS).

Bei einer weiteren Ausgestaltung der Erfindung werden bei der Schätzung der Intensitätswerte des Papillarstruktursignals nur diejenigen Intensitätswerte der Bildsignale berücksichtigt, die nicht dem minimalen oder maximalen diskreten Intensitätswert - also einem der Sättigungswerte - des jeweiligen Intensitätsausschnitts entsprechen. Denn diese Werte repräsentieren gerade nicht die durch die jeweiligen Ausschnitte des kontinuierlichen Intensitätsbereichs erfaßten Intensitäten und könnten daher die jeweilige Schätzung verfälschen. Dieser unerwünschte Effekt wird durch den präventiven Ausschluß der gesättigten Intensitätswerte vorteilhaft vermieden.

Bei einer besonders vorteilhaften vierten Ausführungsform werden binäre Bildsignale aufgenommen, also solche, die nur zwei verschiedene diskrete Werte besitzen, z. B. 0 bzw. "schwarz" und 1 bzw. "weiß". Dazu wird der abzubildende kontinuierliche Intensitätsbereich des Fingerabdruckprofils mittels eines von der Steuereinrichtung festzulegenden Schwellenwertes in einen hellen und einen dunklen Teilbereich aufgeteilt, die jeweils von einen der beiden Intensitätswerte eines binären Bildsignals repräsentiert werden. Alle oberhalb des Schwellenwertes liegenden hellen Intensitätswerte des Fingerabdruckprofils werden im Binärbild durch die Farbe "weiß" repräsentiert, während die unterhalb des Schwellenwertes liegenden dunklen Intensitätswert durch die Farbe "schwarz" repräsentiert werden.

Der jeweilige Schwellenwert zum Definieren eines weißen und eines schwarzen Intensitätsintervalls wird bei der Erzeugung einer Sequenz von binären Bildsignalen von der Steuereinrichtung zunächst niedrig angesetzt und im Laufe dieses Prozesses sukzessive erhöht, so daß auch der Anteil an schwarzen Bildpunkten in den Binärbildern sukzessive steigt. Durch diese inkrementelle Abtastung des kontinuierlichen Intensitätsbereiches wird bei einer hohen Zahl von Binärbildern eine entsprechend hohe Intensitätsauflösung im digitalen Papillarstruktursignal sichergestellt. Die Binärbilder müssen von der Kombinationseinrichtung abschließend nur addiert werden, um das entsprechende Papillarstruktursignal zu erzeugen. Somit kann durch die Aufnahme von n Binärbildern ein Papillarstruktursignal mit *n*+*1* verschiedenen Intensitätswerten erzeugt werden.

Der besondere Vorteil dieser vierten Ausführungsform liegt darin, daß zur Erzeugung einer ausreichenden Intensitätsauflösung besonders einfache und kostengünstige Binärsensoren verwendet werden können. Ebenso können die bereits beschriebenen kapazitiven Sensoren eingesetzt werden, indem mittels der Steuereinrichtung über steigende/ sinkende Ladungsmengen an den Kondensatorplatten - bei fester Einstellung des A/D-Wandlers - eine Binärbildsequenz mit ansteigendem Schwarz/Weiß-Anteil erzeugt wird.

Sämtliche beschriebenen Verfahren und Ausführungsformen sind sowohl für zweidimensionale Bildsignale als auch für eindimensionale Zeitsignale einsetzbar. Es kann also auch die Werteauflösung eines Zeitsignals durch die erfindungsgemäßen Verfahren und Vorrichtungen in analoger Art und Weise erhöht werden.

Weitere Merkmale und Vorteile der Erfindung ergeben sich aus der folgenden Beschreibung verschiedener erfindungsgemäßer Ausführungsbeispiele und Ausführungsalternativen. Es wird auf die Figuren verwiesen, die zeigen:
Figur 1 diagrammartig das Verfahren zur Erhöhung der Intensitätsauflösung gemäß der ersten erfindungsgemäßen Ausführungsform (Kombination von unterschiedliche Intensitätsbereichsausschnitte erfassenden Bildsignalen), wobei sich die Intensitätsbereichsausschnitte überlappen und
Figur 2 ein Schema einer Vorrichtung zum Erhöhen der Intensitätsauflösung durch Kombination binärer Bildsignale gemäß der vierten erfindungsgemäßen Ausführungsform.

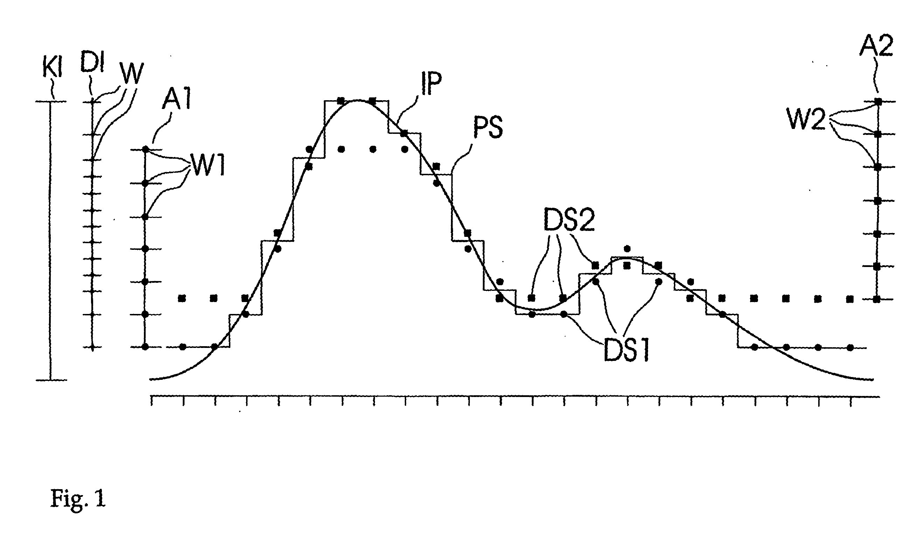

Figur 1 zeigt schematisch in einem Diagramm ein kontinuierliches Intensitätsprofil IP, das beispielsweise als eindimensionaler Auszug eines zweidimensionalen kontinuierlichen Intensitätsprofils einer Teilfläche eines Fingerabdrucks interpretiert werden kann. Die Dimensionsreduktion dient lediglich der besseren Veranschaulichung des erfindungsgemäßen Verfahrens, das in identischer Art und Weise und mit identischem Effekt auch auf ein zweidimensionales Bildsignal anwendbar ist. Dieses Ausführungsbeispiel ist ferner nicht auf Intensitätsbilder beschränkt, sondern es ist gleichermaßen, auch auf Multispektralbilder anwendbar, indem die einzelnen Spektral- bzw. Farbbänder separat in der im folgenden beschriebenen Art und Weise behandelt werden.

Als erster Schritt der Digitalisierung des kontinuierlichen Intensitätsprofils IP werden mit einem herkömmlichen Sensor (oder mehreren verschiedenen Sensoren) zunächst zwei digitale Signale DS1 und DS2 erzeugt, die aufgrund des beschränkten Intensitätsauflösungsvermögens des Sensors jeweils nur die Ausschnitte A1 und A2 des kontinuierlichen Intensitätsbereichs KI des Intensitätsprofils IP erfassen und diese durch jeweils 7 verschiedene diskrete Intensitätswerte W1, W2 repräsentieren. Das heißt, die betreffenden Ausschnitte A1, A2 werden mit derselben Auflösung diskretisiert. Da die beiden Intensitätsbereichsausschnitte A1, A2 der beiden Signale DS1, DS2 jeweils nicht den gesamten kontinuierlichen Intensitätsbereich KI erfassen, liegen bestimmte Areale des kontinuierlichen Intensitätsprofils IP in den jeweiligen Sättigungsbereichen der digitalen Signale DS1, DS2, also jenseits der entsprechenden Intensitätsbereichsausschnitte A1, A2. So wird beispielsweise von dem digitalen Signal DS1 das Intensitätsmaximum des Intensitätsprofils IP nicht mit ausreichender Genauigkeit erfaßt, während bei dem digitalen Signal DS2 die Intensitätsminima des Intensitätsprofils IP im Sättigungsbereich liegen und daher von dem Signal DS2 nicht erfaßt werden.

Die Ausschnitte A1, A2 der beiden digitalen Signale DS1, DS2 sind derart gewählt, daß sie sich überlappen und die jeweiligen diskreten Intensitätswerte W1, W2 leicht gegeneinander verschoben sind. Dadurch bildet sich bei der Kombination der beiden digitalen Signale DS1, DS2 bzw. ihrer Intensitätsbereichsausschnitte A1, A2 ein kombiniertes Papillarstruktursignal PS mit einem entsprechend größeren diskreten Intensitätsbereich DI und mit einer gegenüber den digitalen Signalen DS1, DS2 erhöhten Intensitätsauflösung von insgesamt 2*7-1=13 verschiedenen diskreten Intensitätswerten W. Das sich ergebende digitale Papillarstruktursignal PS ist in Figur 1 als Treppensignal dargestellt. Die aus den sich nicht überlappenden Bereichen der Intensitätsausschnitte A1, A2 abgeleiteten Intensitätswerte W entsprechen dabei den jeweiligen Intensitätswerten W1, W2 des betreffenden digitalen Signals DS1, DS2. Aus dem sich überlappenden Bereich werden hingegen die Intensitätswerte W als Mittelwerte der jeweilig benachbarten diskreten Intensitätswerte W1, W2 der Intensitätsbereichsausschnitte A1, A2 errechnet.

Diese unterschiedliche Vorgehensweise für den Überlappungsbereich und die nicht-überlappenden Bereiche schließt die gesättigten Signalbereiche von der Schätzung der neuen Intensitätswerte W aus, da diese keine zuverlässige Intensitätsinformation über die abgebildete Papillarstruktur repräsentieren und die Schätzung der Intensitätswerte W demzufolge verfälschen könnten. Im Ergebnis bildet der diskrete Intensitätsbereich DI des digitalen Papillarstruktursignals PS einen wesentlich größeren Ausschnitt des kontinuierlichen Intensitätsbereichs KI des Intensitätsprofils IP ab als die von den digitalen Signalen DS1, DS2 erfaßten Ausschnitte A1, A2 und besitzt im Überlappungsbereich der Ausschnitte A1 und A2 eine verdoppelte Intensitätsauflösung. Der diskrete Intensitätsbereich DI des digitalen Papillarstruktursignals PS repräsentiert somit im Vergleich zu den Ausschnitten A1, A2 der digitalen Signalen DS1, DS2 eine wesentlich bessere Approximation des Intensitätsprofils IP.

In einer ersten, in den Figuren nicht explizit dargestellten Variante des soeben beschriebenen erfindungsgemäßen Ausführungsbeispiels überlappen sich die Ausschnitte A1, A2 nicht und schließen unmittelbar aneinander an. Hierbei wird durch die Kombination der entsprechenden digitalen Signale DS1, DS2 ein digitales Papillarstruktursignals PS erzeugt, dessen diskreter Intensitätsbereich DI einen doppelt so großen Ausschnitt des kontinuierlichen Intensitätsbereichs KI erfaßt wie jedes einzelne digitale Signal DS1, DS2. Die Auflösung dieses Intensitätsbereiches DI ist jedoch gleich der der einzelnen Intensitätsbereichsausschnitte A1, A2 der digitalen Signale DS1, DS2. Dementsprechend läßt sich bei ausreichend großen oder ausreichend vielen Ausschnitten A1, A2 der gesamte kontinuierliche Intensitätsbereich KI des Intensitätsprofils IP von dem diskreten Intensitätsbereich DI des Papillarstruktursignals PS mit konstanter Intensitätsauflösung erfassen.

In einer zweiten, in den Figuren nicht explizit dargestellten Ausführungsvariante des in Bezug auf Figur 1 beschriebenen Ausführungsbeispiels werden anstelle von unterschiedlichen Ausschnitten A1, A2 mit derselben Auflösung identische Ausschnitte A1 und A2 mit unterschiedlichen Auflösungen gewählt. In diesem Fall bildet der diskrete Intensitätsbereich DI des digitalen Papillarstruktursignals PS lediglich diesen Intensitätsbereichsausschnitt ab, seine Intensitätsauflösung ist jedoch erheblich höher, als bei den Ausschnitten A1, A2. Falls die Ausschnitte A1 und A2 in *a₁* bzw. *a₂* verschiedene diskrete Intensitätswerte W1, W2 aufgeteilt sind, umfaßt der diskrete Intensitätsbereich DI maximal *a₁*+*a₂*-*1* verschiedene Intensitätswerte W.

Schließlich läßt sich das Ausführungsbeispiel gemäß Figur 1 auch derart abwandeln, daß unterschiedliche Ausschnitte mit unterschiedlichen Auflösungen zu einem digitalen Papillarstruktursignal kombiniert werden.

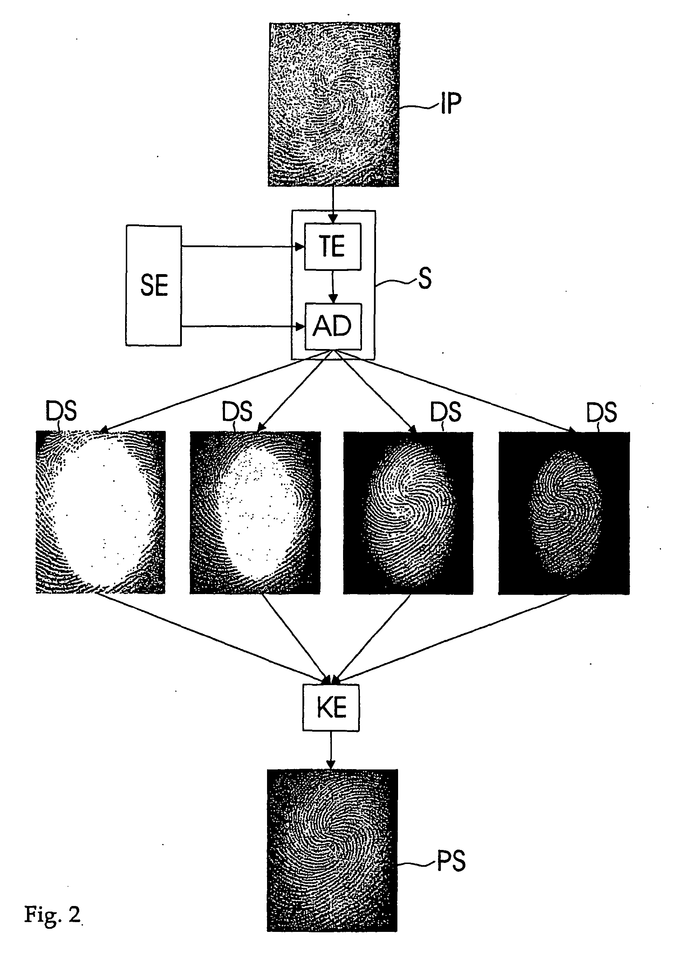

Figur 2 zeigt mit einer Vorrichtung zum Digitalisieren von Intensitätsprofilen IP eines Fingerabdrucks mittels eines Sensors S ein anderes Ausführungsbeispiel der Erfindung, die kontinuierliche (analoge) Bilder als binäre digitale Bildsignale DS abbildet, also als solche digitale Bildsignale DS, die lediglich zwei verschiedene Intensitätswerte "weiß" und "schwarz" besitzen.

Der Sensor S umfaßt eine Transformationseinrichtung TE bzw. einen Signalwandler, der das Intensitätsprofil IP eines Eingangsbildes in ein analoges elektrisches Signal transformiert und einen Analog/Digital-Wandler AD, der das analoge elektrische Signal durch Abtastung seines Orts- und/ oder Intensitätsbereichs schließlich in ein oder mehrere digitale Signale umwandelt.

Sowohl die Transformation der Transformationseinrichtung TE als auch die des A/D-Wandlers AD werden von der Steuereinrichtung SE gesteuert. Diese bestimmt einerseits den jeweils von einem digitalen Bildsignal DS zu erfassenden Ausschnitt des Intensitätsbereichs des Intensitätsprofils IP, und andererseits bestimmt sie die Auflösung, mit welcher diese Intensitätsausschnitte jeweils quantisiert werden. Hierbei kann die Steuereinrichtung SE entweder die Transformationseinrichtung TE oder den A/D-Wandler AD veranlassen, einen bestimmten Ausschnitt des kontinuierlichen Intensitätsbereichs bei der Aufnahme und Digitalisierung des Intensitätsprofils IP der Papillarstruktur zu erfassen. Die Steuereinrichtung kann sowohl als separates Bauteil als auch als integraler Teil der Transformationseinrichtung TE und/ oder des A/ D-Wandlers AD realisiert werden.

Die eigentliche Digitalisierung des analogen Intensitätsprofils IP, bestehend aus der Diskretisierung von Orts- und/ oder Intensitätsbereich, wird dann von dem A/D-Wandler AD vorgenommen. Die Quantisierung, also die Abtastung des Intensitätsbereichsausschnitts und dessen Auflösung, wird ebenfalls von der Steuereinrichtung SE festgelegt.

Gemäß eines anderen, in Figur 2 gezeigten Ausführungsbeispiels erzeugt der Sensor S binäre digitale Bildsignale DS, wobei die Abtastung des kontinuierlichen Intensitätsbereichs mit zwei diskreten Intensitätswerten durch die Steuereinrichtung SE mittels eines Schwellenwertes, der sogenannten Binarisierungsschwelle, festgelegt wird. Dieser Schwellenwert teilt den kontinuierlichen Intensitätsbereich des zu digitalisierenden analogen Intensitätsprofils IP in ein "dunkles" Intensitätssegment, das im digitalen Bildsignal DS auf den binären Intensitätswert 0 abgebildet wird, und ein "helles" Intensitätssegment, das auf den Intensitätswert 1 abgebildet wird. Bei der Erzeugung eines derartigen binären digitalen Bildsignals DS erhalten also all jene diskreten Bildpositionen (Pixel) den Binärwert 1, deren kontinuierlicher Intensitätsbereich im Intensitätsprofil IP des korrespondierenden Bildareals im Mittel einen Intensitätswert aufweist, der sich in dem durch die Binarisierungsschwelle bestimmten hellen Intensitätssegment befindet.

Um aus binären digitalen Bildsignalen DS ein Papillarstruktursignal PS zu erzeugen, das eine hohe Intensitätsauflösung besitzt, wird eine Sequenz binärer digitaler Bildsignale DS erzeugt und dabei die Binarisierungsschwelle sukzessive erhöht bzw. reduziert oder in anderer Reihenfolge geändert, um auf diese Weise den gesamten kontinuierlichen Intensitätsbereich schrittweise abzutasten. Bei der anschließenden Kombination der verschiedenen diskreten Intensitätsbereiche der binären digitalen Bildsignale DS durch die Kombinationseinrichtung KE ergeben sich neue, kleinere Intensitätsintervalle aus der Überlagerung der jeweiligen Intensitätssegmente der digitalen Bildsignale DS. Die Kombinationseinrichtung KE weist dann jedem dieser Intensitätsintervalle einen neuer, exakteren diskreten Intensitätswert zu. Dies geschieht bei dem vorliegenden Ausführungsbeispiel mittels einfacher Addition aller digitaler Bildsignale DS durch die Kombinationseinrichtung KE. Dadurch ergibt sich für jeden einzelnen Bildpunkt des Papillarstruktursignals PS als Intensitätswert genau die Anzahl aller digitalen Bildsignale DS, die an dem korrespondierende Bildpunkt den Binärwert 1 tragen.

Falls die Steuereinrichtung SE n digitale Bildsignale DS mit verschiedenen Binarisierungsschwellen erzeugt hat, erzeugt die Kombinationseinrichtung KE ein digitales Papillarstruktursignal PS mit *n*+*1* verschiedenen diskreten Intensitätswerten.

## Patentansprüche

1. Verfahren zum Digitalisieren wenigstens einer Teilfläche der Papillarstruktur der Haut, wobei die Teilfläche ein Intensitätsprofil (IP) mit kontinuierlichem Intensitätsbereich (KI) definiert, umfassend die Schritte:
- Transformieren des Intensitätsprofils (IP) in ein analoges elektrisches Signal und
- Transformieren dieses analogen elektrischen Signals in wenigstens ein digitales Signal (DS, DS1, DS2) mit einem aus diskreten Intensitätswerten (W, W1, W2) bestehenden Intensitätsbereich (A1, A2) und einem aus diskreten Positionen bestehenden Ortsbereich,
**gekennzeichnet dadurch, daß** die Schritte
des Transformierens des Intensitätsprofils (IP) in ein analoges elektrisches Signal und
des Transformierens dieses analogen elektrischen Signals in wenigstens ein digitales Signal (DS, DS1, DS2) mit einem aus diskreten Intensitätswerten (W, W1, W2) bestehenden Intensitätsbereich (A1, A2) und einem aus diskreten Positionen bestehenden Ortsbereich
für dieselbe Teilfläche mehrmals zur Bildung von unterschiedlichen digitalen Signalen (DS, DS1, DS2) mit jeweils verschiedenen Intensitätsdiskretisierungen (Quantisierungen) durchgeführt werden und
- die digitalen Signale (DS, DS1, DS2) zu einem gemeinsamen digitalen Papillarstruktursignal (PS) mit einem aus diskreten Intensitätswerten (W) gebildeten Intensitätsbereich (DI) und einem aus diskreten Positionen gebildeten Ortsbereich derart kombiniert werden, daß der Intensitätsbereich (DI) des Papillarstruktursignals (PS) mehr Intensitätswerte (W) aufweist, als der Intensitätsbereich jedes einzelnen digitalen Signals (DS, DS1, DS2).

2. Verfahren nach Anspruch 1, **dadurch gekennzeichnet, daß** das mehrmalige Durchführen der Schritte des Transformierens für jeweils verschiedene Ausschnitte (A1, A2) des kontinuierlichen Intensitätsbereichs (KI) erfolgt, so daß nach dem Schritt des Kombinierens der Intensitätsbereich (DI) des digitalen Papillarstruktursignals (PS) einen größeren Ausschnitt des kontinuierlichen Intensitätsbereichs (KI) erfaßt als die Intensitätsbereiche jedes einzelnen digitalen Signals (DS, DS1, DS2).

3. Verfahren nach Anspruch 2, **dadurch gekennzeichnet, daß** bei dem mehrmaligen Durchführen der Schritte des Transformierens die Ausschnitte (A1, A2) des kontinuierlichen Intensitätsbereichs (KI) beim Transformieren des Intensitätsprofils (IP) in das analoge elektrische Signal bestimmt werden.

4. Verfahren nach Anspruch 3, **dadurch gekennzeichnet, daß** die Bestimmung des zweiten und der weiteren Ausschnitte mittels Daten des oder der vorherigen Abschnitte erfolgt.

5. Verfahren nach Anspruch 3 oder 4, **dadurch gekennzeichnet, daß** die Anzahl der Intensitätswerte (W) durch die Wahl bzw. Anzahl der Ausschnitte bestimmt wird.

6. Verfahren nach einem der Ansprüche 3 bis 5, **dadurch gekennzeichnet, daß** das Transformieren des Intensitätsprofils (IP) in ein analoges elektrisches Signal durch einen kapazitiven Signalwandler erfolgt, und daß der Ausschnitt (A1, A2) des kontinuierlichen Intensitätsbereichs (KI) durch auf den Kondensatoren des kapazitiven Signalwandlers aufgebrachte Ladungsmengen bestimmt wird.

7. Verfahren nach Anspruch 2, **dadurch gekennzeichnet, daß** bei dem mehrmaligen Durchführen der Schritte des Transformierens die Ausschnitte (A1, A2) des kontinuierlichen Intensitätsbereichs (KI) beim Transformieren des analogen elektrischen Signals in ein digitales Signal (DS, DS1, DS2) bestimmt werden.

8. Verfahren nach Anspruch 7, **dadurch gekennzeichnet, daß** die Bestimmung des zweiten und der weiteren Ausschnitte mittels Daten des oder der vorherigen Abschnitte erfolgt.

9. Verfahren nach Anspruch 7 oder 8, **dadurch gekennzeichnet, daß** die Anzahl der Intensitätswerte (W) durch die Wahl bzw. Anzahl der Ausschnitte bestimmt wird.

10. Verfahren nach einem der Ansprüche 2 bis 5, **dadurch gekennzeichnet, daß** die Ausschnitte (A1, A2) des kontinuierlichen Intensitätsbereichs (KI) zusammen den gesamten kontinuierlichen Intensitätsbereich (KI) abdecken.

11. Verfahren nach einem der Ansprüche 2 bis 10, **dadurch gekennzeichnet, daß** die Ausschnitte (A1, A2) des kontinuierlichen Intensitätsbereichs (KI) aneinander anschließen und sich nicht überlappen.

12. Verfahren nach einem der Ansprüche 2 bis 10, **dadurch gekennzeichnet, daß** sich die Ausschnitte (A1, A2) des kontinuierlichen Intensitätsbereichs (KI) überlappen.

13. Verfahren nach einem der Ansprüche 1 bis 12, **dadurch gekennzeichnet, daß** das mehrmalige Durchführen der Schritte des Transformierens mit jeweils verschiedenen Anzahlen von diskreten Intensitätswerten (W1, W2) der Intensitätsbereiche der digitalen Signale (DS, DS1, DS2) erfolgt.

14. Verfahren nach einem der Ansprüche 1 bis 13, **dadurch gekennzeichnet, daß** der Schritt des Kombinierens die folgenden Teilschritte umfaßt:
- Schätzen eines diskreten Intensitätswerts (W) für jede diskrete Position des digitalen Papillarstruktursignals (PS) aus den jeweiligen diskreten Intensitätswerten (W1, W2) der entsprechend korrespondierenden diskreten Positionen der digitalen Signale (DS, DS1, DS2) und
- Eintragen des geschätzten Intensitätswertes (W) an der entsprechenden diskreten Position des digitalen Papillarstruktursignals (PS).

15. Verfahren nach einem der Ansprüche 2 bis 12 mit Anspruch 14, **dadurch gekennzeichnet, daß** der Schritt des Kombinierens vor den Teilschritten des Schätzens und des Eintragens den folgenden Teilschritt umfaßt:
- Normieren der Intensitätsbereiche der digitalen Signale (DS, DS1, DS2) auf den von dem jeweiligen digitalen Signal (DS, DS1, DS2) erfaßten Ausschnitt (A1, A2) des kontinuierlichen Intensitätsbereichs (KI).

16. Verfahren nach Anspruch 15, **dadurch gekennzeichnet, daß** bei dem Schritt des Schätzens nur diejenigen diskreten Intensitätswerte (W1, W2) der entsprechend korrespondierenden Positionen der digitalen Signale (DS, DS1, DS2) berücksichtigt werden, die keinen maximalen oder minimalen Intensitätswert (W1, W2) des jeweiligen digitalen Signals (DS, DS1, DS2) repräsentieren.

17. Verfahren nach einem der Ansprüche 14 bis 16, **dadurch gekennzeichnet, daß** beim Schritt des Schätzens als diskreter Intensitätswert (W) einer diskreten Position des digitalen Papillarstruktursignals (PS) der arithmetische Mittelwertes der diskreten Intensitätswerte (W1, W2) der entsprechend korrespondierenden Positionen der digitalen Signale (DS, DS1, DS2) gebildet wird.

18. Verfahren nach einem der Ansprüche 1 bis 13, **dadurch gekennzeichnet, daß** bei dem mehrmaligen Durchführen der Schritte des Transformierens der kontinuierliche Intensitätsbereich (KI) auf Intensitätsbereiche der digitalen Signalen (DS, DS1, DS2) mit jeweils nur zwei diskreten Intensitätswerten (W1, W2) abgebildet wird, wobei für jedes digitale Signal (DS, DS1, DS2) ein unterschiedlicher Schwellenwert zum Teilen des kontinuierlichen Intensitätsbereichs (KI) in zwei Teilbereiche bestimmt wird, die jeweils auf einen der beiden diskreten Intensitätswerte (W1, W2) eines jeden digitalen Signals (DS, DS1, DS2) abgebildet werden.

19. Verfahren nach Anspruch 18, **dadurch gekennzeichnet, daß** beim Schritt des Kombinierens die digitalen Signale (DS, DS1, DS2) addiert werden.

20. Verfahren nach einem der Ansprüche 1 bis 17, **dadurch gekennzeichnet, daß** bei dem mehrmaligen Durchführen der Schritte des Transformierens durch Verwendung von speziellen Farbsensoren, die das Spektrum des sichtbaren Lichts gemäß bekannter additiver oder subtraktiver Farbräume nach zu mischenden Grundfarben in Spektralbänder getrennt erfassen, digitale Farbsignale (DS, DS1, DS2) erzeugt werden, und aus diesen beim Schritt des Kombinierens ein digitales Papillarstruktur-Farbsignal (PS) erzeugt wird.

21. Vorrichtung zum Digitalisieren wenigstens einer Teilfläche der Papillarstruktur der Haut, wobei die Teilfläche ein Intensitätsprofil (IP) mit kontinuierlichem Intensitätsbereich (KI) definiert, umfassend eine Transformationseinrichtung (TE) zum Transformieren des Intensitätsprofils (IP) in ein analoges elektrisches Signal und einen Analog/Digital-Wandler (AD) zum Transformieren dieses analogen elektrischen Signals in wenigstens ein digitales Signal (DS, DS1, DS2) mit einem aus diskreten Intensitätswerten (W1, W2) bestehendem Intensitätsbereich und einem aus diskreten Positionen bestehenden Ortsbereich, **dadurch gekennzeichnet, daß** die Vorrichtung ferner umfaßt:
eine Steuereinrichtung (SE), die die Transformationseinrichtung (TE) und den Analog/Digital-Wandler (AD) veranlaßt, für dieselbe Teilfläche
das Transformieren des Intensitätsprofils (IP) in ein analoges elektrisches Signal und
das Transformieren dieses analogen elektrischen Signals in wenigstens ein digitales Signal (DS, DS1, DS2) mit einem aus diskreten Intensitätswerten (W, W1, W2) bestehenden Intensitätsbereich (A1, A2) und einem aus diskreten Positionen bestehenden Ortsbereich
für dieselbe Teilfläche mehrmals zur Bildung von unterschiedlichen digitalen Signalen (DS, DS1, DS2) mit jeweils verschiedenen Intensitätsdiskretisierungen (Quantisierungen) zu erzeugen und
eine Kombinationseinrichtung (KE), die die digitalen Signale (DS, DS1, DS2) zu einem gemeinsamen digitalen Papillarstruktursignal (PS) mit einem aus diskreten Intensitätswerten (W) bestehenden Intensitätsbereich (DI) und einem aus diskreten Positionen bestehenden Ortsbereich derart kombiniert, daß der Intensitätsbereich (DI) des digitalen Papillarstruktursignals (PS) mehr diskrete Intensitätswerte (W) aufweist als der Intensitätsbereich jedes einzelnen digitalen Signals (DS, DS1, DS2).

22. Vorrichtung nach Anspruch 21, **dadurch gekennzeichnet, daß**
die Steuereinrichtung (SE) jeweils verschiedene auf den Intensitätsbereich des jeweiligen digitalen Signals (DS, DS1, DS2) abzubildende Ausschnitte (A1, A2) des kontinuierlichen Intensitätsbereichs (KI) des Intensitätsprofils (IP) bestimmt und
die Kombinationseinrichtung (KE) die digitalen Signale (DS, DS1, DS2) derart kombiniert, daß der Intensitätsbereich (DI) des digitalen Papillarstruktursignals (PS) einen größeren Ausschnitt (A1, A2) des kontinuierlichen Intensitätsbereichs (KI) erfaßt als der Intensitätsbereich jedes einzelnen digitalen Signals (DS, DS1, DS2).

23. Vorrichtung nach Anspruch 22, **dadurch gekennzeichnet, daß** ein von der Steuereinrichtung (SE) bestimmter abzubildender Ausschnitt (A1, A2) des kontinuierlichen Intensitätsbereichs (KI) des Intensitätsprofils (IP) bei der Transformation des Intensitätsprofils (IP) durch die Transformationseinrichtung (TE) auf das analoge elektrische Signal abgebildet wird.

24. Vorrichtung nach Anspruch 22 oder 23, **dadurch gekennzeichnet, daß** die Transformationseinrichtung (TE) ein kapazitiver Signalwandler ist.

25. Vorrichtung nach Anspruch 22, **dadurch gekennzeichnet, daß** ein von der Steuereinrichtung (SE) bestimmter abzubildender Ausschnitt (A1, A2) des kontinuierlichen Intensitätsbereichs (KI) des Intensitätsprofils (IP) bei der Transformation des analogen elektrischen Signals durch den Analog/Digital-Wandler (AD) auf ein digitales Signal (DS, DS1, DS2) abgebildet wird.

26. Vorrichtung nach einem der Ansprüche 22 bis 25, **dadurch gekennzeichnet, daß** die Steuereinrichtung (SE) die abzubildenden Ausschnitte (A1, A2) des kontinuierlichen Intensitätsbereichs (KI) des Intensitätsprofils (IP) derart einstellt, daß sie insgesamt den gesamten kontinuierlichen Intensitätsbereich (KI) abdecken.

27. Vorrichtung nach einem der Ansprüche 21 bis 26, **dadurch gekennzeichnet, daß** die Steuereinrichtung (SE) jeweils verschiedene Anzahlen von diskreten Intensitätswerten (W1, W2) für die Intensitätsbereiche der digitalen Signale (DS, DS1, DS2) bestimmt.

28. Vorrichtung nach einem der Ansprüche 21 bis 26, **dadurch gekennzeichnet, daß** die Kombinationseinrichtung (KE) einen diskreten Intensitätswert (W) für jede diskrete Position des digitalen Papillarstruktursignals (PS) aus den jeweiligen diskreten Intensitätswerten (W1, W2) der entsprechend korrespondierenden diskreten Positionen der digitalen Signale (DS, DS1, DS2) schätzt.

29. Vorrichtung nach einem der Ansprüche 22 bis 26 mit Anspruch 28, **dadurch gekennzeichnet, daß** die Kombinationseinrichtung (KE) vor dem Schätzen der diskreten Intensitätswerte (W) des digitalen Papillarstruktursignals (PS) die Intensitätsbereiche der digitalen Signale (DS, DS1, DS2) auf den von dem jeweiligen digitalen Signal (DS, DS1, DS2) erfaßten Ausschnitt (A1, A2) des kontinuierlichen Intensitätsbereichs (KI) normiert.

30. Vorrichtung nach Anspruch 29, **dadurch gekennzeichnet, daß** die Kombinationseinrichtung (KE) beim Schätzen der diskreten Intensitätswerte (W) des digitalen Papillarstruktursignals (PS) nur diejenigen Intensitätswerte (W1, W2) der entsprechend korrespondierenden diskreten Positionen der digitalen Signale (DS, DS1, DS2) berücksichtigt, die weder den maximalen noch den minimalen Intensitätswert (W1, W2) des jeweiligen Intensitätsbereichs repräsentieren.

31. Vorrichtung nach einem der Ansprüche 21 bis 27, **dadurch gekennzeichnet, daß**
die Steuereinrichtung (SE) für jedes digitale Signal (DS, DS1, DS2) Intensitätsbereiche mit nur zwei diskreten Intensitätswerten (W1, W2) bestimmt und für jedes digitale Signal (DS, DS1, DS2) einen unterschiedlichen Schwellenwert zum Teilen des kontinuierlichen Intensitätsbereichs (KI) in zwei Teilbereiche bestimmt, zum Abbilden eines der Teilbereiche auf jeweils einen der beiden diskreten Intensitätswerte (W1, W2) jedes digitalen Signals (DS, DS1, DS2), und daß
die Kombinationseinrichtung (KE) die digitalen Signale (DS, DS1, DS2) addiert.

32. Vorrichtung nach einem der Ansprüche 21 bis 30, **dadurch gekennzeichnet, daß**
die Transformationseinrichtung (TE) unter Verwendung spezieller Farbsensoren, die das Spektrum des sichtbaren Lichts gemäß bekannter additiver oder subtraktiver Farbräume nach zu mischenden Grundfarben in Spektralbänder getrennt erfassen, und der Analog/ Digital-Wandler (AD) digitale Farbsignale (DS, DS1, DS2) erzeugen,
die Steuereinrichtung (SE) die Transformationseinrichtung (TE) und den Analog/Digital-Wandler (AD) veranlaßt, für dieselbe Teilfläche unterschiedliche digitale Farbsignale (DS, DS1, DS2) zu erzeugen, und
die Kombinationseinrichtung (KE) ein digitales Papillarstruktur-Farbsignal (PS) erzeugt.

## Claims

1. A method for digitizing at least a subarea of the papillary structure of the skin, the subarea defining an intensity profile (IP) with a continuous intensity domain (KI), comprising the steps of:
- transforming the intensity profile (IP) into an analog electrical signal, and
- transforming said analog electrical signal into at least one digital signal (DS, DS1, DS2) with an intensity domain (A1, A2) consisting of discrete intensity values (W, W1, W2) and a space domain consisting of discrete positions,
**characterized in that** the steps of
transforming the intensity profile (IP) into an analog electrical signal, and transforming said analog electrical signal into at least one digital signal (DS, DS1, DS2) with an intensity domain (A1, A2) consisting of discrete intensity values (W, W1, W2) and a space domain consisting of discrete positions,
are performed for the same subarea repeatedly to form different digital signals (DS, DS1, DS2) with different intensity discretizations (quantizations) in each case, and
- the digital signals (DS, DS1, DS2) are combined into a common digital papillary structure signal (PS) with an intensity domain (DI) formed from discrete intensity values (W) and a space domain formed from discrete positions in such a way that the intensity domain (DI) of the papillary structure signal (PS) has more intensity values (W) than the intensity domain of each single digital signal (DS, DS1, DS2).

2. The method according to claim 1, **characterized in that** the repeated performing of the transforming steps is done for different portions (A1, A2) of the continuous intensity domain (KI) in each case, so that after the combining step the intensity domain (DI) of the digital papillary structure signal (PS) covers a larger portion of the continuous intensity domain (KI) than the intensity domains of each single digital signal (DS, DS 1, DS2).

3. The method according to claim 2, **characterized in that** upon the repeated performing of the transforming steps, the portions (A1, A2) of the continuous intensity domain (KI) are determined upon transforming the intensity profile (IP) into the analog electrical signal.

4. The method according to claim 3, **characterized in that** the determination of the second and the further portions is done by means of data of the previous portion or portions.

5. The method according to claim 3 or 4, **characterized in that** the number of intensity values (W) is determined by the choice or number of portions.

6. The method according to any of claims 3 to 5, **characterized in that** the transforming of the intensity profile (IP) into an analog electrical signal is done by a capacitive signal converter, and the portion (A1, A2) of the continuous intensity domain (KI) is determined by quantities of charge applied to the capacitors of the capacitive signal converter.

7. The method according to claim 2, **characterized in that** upon the repeated performing of the transforming steps, the portions (A1, A2) of the continuous intensity domain (KI) are determined upon transforming the analog electrical signal into a digital signal (DS, DS1, DS2).

8. The method according to claim 7, **characterized in that** the determination of the second and the further portions is done by means of data of the previous portion or portions.

9. The method according to claim 7 or 8, **characterized in that** the number of intensity values (W) is determined by the choice or number of portions.

10. The method according to any of claims 2 to 5, **characterized in that** the portions (A1, A2) of the continuous intensity domain (KI) together cover the total continuous intensity domain (KI).

11. The method according to any of claims 2 to 10, **characterized in that** the portions (A1, A2) of the continuous intensity domain (KI) are adjacent and do not overlap.

12. The method according to any of claims 2 to 10, **characterized in that** the portions (A1, A2) of the continuous intensity domain (KI) overlap.

13. The method according to any of claims 1 to 12, **characterized in that** the repeated performing of the transforming steps is done with different numbers of discrete intensity values (W1, W2) of the intensity domains of the digital signals (DS, DS1, DS2) in each case.

14. The method according to any of claims 1 to 13, **characterized in that** the combining step comprises the following substeps:
- estimating a discrete intensity value (W) for each discrete position of the digital papillary structure signal (PS) from the respective discrete intensity values (W1, W2) of the accordingly corresponding discrete positions of the digital signals (DS, DS1, DS2), and
- entering the estimated intensity value (W) at the corresponding discrete position of the digital papillary structure signal (PS).

15. The method according to any of claims 2 to 12 with claim 14, **characterized in that** the combining step comprises before the estimating and entering substeps the following substep:
- normalizing the intensity domains of the digital signals (DS, DS1, DS2) to the portion (A1, A2) of the continuous intensity domain (KI) captured by the respective digital signal (DS, DS1, DS2).

16. The method according to claim 15, **characterized in that** upon the estimating step, only those discrete intensity values (W1, W2) of the accordingly corresponding positions of the digital signals (DS, DS1, DS2) are taken into account that do not represent a maximum or minimum intensity value (W1, W2) of the respective digital signal (DS, DS1, DS2).

17. The method according to any of claims 14 to 16, **characterized in that** upon the estimating step, the arithmetic mean of the discrete intensity values (W1, W2) of the accordingly corresponding positions of the digital signals (DS, DS1, DS2) is formed as the discrete intensity value (W) of a discrete position of the digital papillary structure signal (PS).

18. The method according to any of claims 1 to 13, **characterized in that** upon the repeated performing of the transforming steps, the continuous intensity domain (KI) is mapped to intensity domains of the digital signals (DS, DS1, DS2) with only two discrete intensity values (W1, W2) in each case, whereby for each digital signal (DS, DS1, DS2) a different threshold value is determined for partitioning the continuous intensity domain (KI) into two subdomains which are each mapped to one of the two discrete intensity values (W1, W2) of each digital signal (DS, DS1, DS2).

19. The method according to claim 18, **characterized in that** upon the combining step, the digital signals (DS, DS1, DS2) are added up.

20. The method according to any of claims 1 to 17, **characterized in that** upon the repeated performing of the transforming steps, digital color signals (DS, DS1, DS2) are generated through the use of special color sensors that capture the spectrum of visible light according to known additive or subtractive color spaces separated into spectral bands according to primary colors to be mixed, and a digital papillary structure color signal (PS) is generated therefrom upon the combining step.

21. An apparatus for digitizing at least a subarea of the papillary structure of the skin, the subarea defining an intensity profile (IP) with a continuous intensity domain (KI), comprising a transformation device (TE) for transforming the intensity profile (IP) into an analog electrical signal, and an analog/digital converter (AD) for transforming said analog electrical signal into at least one digital signal (DS, DS1, DS2) with an intensity domain consisting of discrete intensity values (W1, W2) and a space domain consisting of discrete positions, **characterized in that** the apparatus further comprises:
a control device (SE) which causes the transformation device (TE) and the analog/digital converter (AD) to generate for the same subarea
the transforming of the intensity profile (IP) into an analog electrical signal, and
the transforming said analog electrical signal into at least one digital signal (DS, DS1, DS2) with an intensity domain (A1, A2) consisting of discrete intensity values (W, W1, W2) and a space domain consisting of discrete positions
for the same subarea repeatedly to form different digital signals (DS, DS1, DS2) with different intensity discretizations (quantizations) in each case, and
a combination device (KE) which combines the digital signals (DS, DS1, DS2) into a common digital papillary structure signal (PS) with an intensity domain (DI) consisting of discrete intensity values (W) and a space domain consisting of discrete positions in such a way that the intensity domain (DI) of the digital papillary structure signal (PS) has more discrete intensity values (W) than the intensity domain of each single digital signal (DS, DS 1, DS2).

22. The apparatus according to claim 21, **characterized in that**
the control device (SE) determines in each case different portions (A1, A2) of the continuous intensity domain (KI) of the intensity profile (IP) to be mapped to the intensity domain of the respective digital signal (DS, DS1, DS2), and
the combination device (KE) combines the digital signals (DS, DS1, DS2) in such a way that the intensity domain (DI) of the digital papillary structure signal (PS) covers a larger portion (A1, A2) of the continuous intensity domain (KI) than the intensity domain of each single digital signal (DS, DS1, DS2).

23. The apparatus according to claim 22, **characterized in that** a portion (A1, A2) to be mapped of the continuous intensity domain (KI) of the intensity profile (IP) as determined by the control device (SE) is mapped to the analog electrical signal upon transformation of the intensity profile (IP) by the transformation device (TE).

24. The apparatus according to claim 22 or 23, **characterized in that** the transformation device (TE) is a capacitive signal converter.

25. The apparatus according to claim 22, **characterized in that** a portion (A1, A2) to be mapped of the continuous intensity domain (KI) of the intensity profile (IP) as determined by the control device (SE) is mapped to a digital signal (DS, DS1, DS2) upon transformation of the analog electrical signal by the analog/digital converter (AD).

26. The apparatus according to any of claims 22 to 25, **characterized in that** the control device (SE) adjusts the portions (A1, A2) to be mapped of the continuous intensity domain (KI) of the intensity profile (IP) in such a way that they altogether cover the total continuous intensity domain (KI).

27. The apparatus according to any of claims 21 to 26, **characterized in that** the control device (SE) determines in each case different numbers of discrete intensity values (W1, W2) for the intensity domains of the digital signals (DS, DS1, DS2).

28. The apparatus according to any of claims 21 to 26, **characterized in that** the combination device (KE) estimates a discrete intensity value (W) for each discrete position of the digital papillary structure signal (PS) from the respective discrete intensity values (W1, W2) of the accordingly corresponding discrete positions of the digital signals (DS, DS1, DS2).

29. The apparatus according to any of claims 22 to 26 with claim 28, **characterized in that** the combination device (KE), before estimation of the discrete intensity values (W) of the digital papillary structure signal (PS), normalizes the intensity domains of the digital signals (DS, DS1, DS2) to the portion (A1, A2) of the continuous intensity domain (KI) captured by the respective digital signal (DS, DS1, DS2).

30. The apparatus according to claim 29, **characterized in that** the combination device (KE), upon estimation of the discrete intensity values (W) of the digital papillary structure signal (PS), takes into account only those intensity values (W1, W2) of the accordingly corresponding discrete positions of the digital signals (DS, DS1, DS2) that do not represent either the maximum or the minimum intensity value (W1, W2) of the particular intensity domain.

31. The apparatus according to any of claims 21 to 27, **characterized in that**
the control device (SE) determines for each digital signal (DS, DS1, DS2) intensity domains with only two discrete intensity values (W1, W2), and determines for each digital signal (DS, DS1, DS2) a different threshold value for partitioning the continuous intensity domain (KI) into two subdomains, for mapping one of the subdomains to in each case one of the two discrete intensity values (W1, W2) of each digital signal (DS, DS1, DS2), and
the combination device (KE) adds up the digital signals (DS, DS1, DS2).

32. The apparatus according to any of claims 21 to 30, **characterized in that**
the transformation device (TE), through the use of special color sensors that capture the spectrum of visible light according to known additive or subtractive color spaces separated into spectral bands according to primary colors to be mixed, and the analog/digital converter (AD) generate digital color signals (DS, DS1, DS2),
the control device (SE) causes the transformation device (TE) and the analog/digital converter (AD) to generate different digital color signals (DS, DS1, DS2) for the same subarea, and
the combination device (KE) generates a digital papillary structure color signal (PS).

## Revendications

1. Procédé de digitalisation d'au moins une surface partielle de la structure papillaire de la peau, la surface partielle définissant un profil d'intensité (IP) à zone d'intensité continue (KI), comprenant les étapes suivantes :
- transformation du profil d'intensité (IP) en un signal analogique électrique et
- transformation de ce signal analogique électrique en au moins un signal numérique (DS, DS1, DS2) ayant une zone d'intensité (A1, A2) composée de valeurs d'intensité discrètes (W, W1, W2) et une zone spatiale composée de positions discrètes,
**caractérisé en ce que** les étapes
de la transformation du profil d'intensité (IP) en un signal électrique analogique et
de la transformation de ce signal électrique analogique en au moins un signal numérique (DS, DS1, DS2) ayant une zone d'intensité (A1, A2) composée de valeurs d'intensité discrètes (W, W1, W2) et une zone spatiale composée de positions discrètes
sont exécutées plusieurs fois pour la même surface partielle pour constituer différents signaux numérique (DS, DS1, DS2) avec des discrétisations d'intensité (quantifications) respectivement différentes et
- **en ce que** les signaux numériques (DS, DS1, DS2) sont combinés de manière à obtenir un signal numérique de structure papillaire commun (PS) ayant une zone d'intensité (D1) composée de valeurs d'intensité discrètes (W) et une zone spatiale composée de positions discrètes, de telle sorte que la zone d'intensité (D1) du signal de structure papillaire (PS) présente davantage de valeurs d'intensité (W) que la zone d'intensité de chaque signal numérique distinct (DS, DS1, DS2).

2. Procédé selon la revendication 1, **caractérisé en ce que** l'exécution réitérée des étapes de la transformation a lieu pour respectivement différents fragments (A1, A2) de la zone d'intensité continue (KI), de telle sorte que, une fois l'étape de la combinaison exécutée, la zone d'intensité (D1) du signal numérique de structure papillaire (PS) saisit un plus grand fragment de la zone d'intensité continue (KI) que les zones d'intensité de chaque signal numérique distinct (DS, DS1, DS2).

3. Procédé selon la revendication 2, **caractérisé en ce que**, lors de l'exécution réitérée des étapes de la transformation, les fragments (A1, A2) de la zone d'intensité continue (KI) sont déterminés lors de la transformation du profil d'intensité (IP) en le signal électrique analogique.

4. Procédé selon la revendication 3, **caractérisé en ce que** la détermination du deuxième fragment et des autres fragments a lieu au moyen de données du ou des fragment(s) précédents.

5. Procédé selon la revendication 3 ou 4, **caractérisé en ce que** le nombre des valeurs d'intensité (W) est déterminé par le choix ou le nombre des fragments.

6. Procédé selon une des revendications de 3 à 5, **caractérisé en ce que** la transformation du profil d'intensité (IP) en un signal électrique analogique a lieu par l'intermédiaire d'un convertisseur de signal capacitif, et **en ce que** le fragment (A1, A2) de la zone d'intensité continue (KI) est déterminé par des quantités de charge appliquées sur le condensateur du convertisseur de signal capacitif.

7. Procédé selon la revendication 2, **caractérisé en ce que**, lors de l'exécution réitérée des étapes de la transformation, les fragments (A1, A2) de la zone d'intensité continue (KI) sont déterminés lors de la transformation du signal électrique analogique en un signal numérique (DS, DS1, DS2).

8. Procédé selon la revendication 7, **caractérisé en ce que** la détermination du deuxième fragment et des autres fragments a lieu au moyen de données du ou des fragment(s) précédents.

9. Procédé selon la revendication 7 ou 8, **caractérisé en ce que** le nombre des valeurs d'intensité (W) est déterminé par le choix ou le nombre des fragments.

10. Procédé selon une des revendications de 2 à 5, **caractérisé en ce que** les fragments (A1, A2) de la zone d'intensité continue (KI) couvrent ensemble la totalité de la zone d'intensité continue (KI).

11. Procédé selon une des revendications de 2 à 10, **caractérisé en ce que** les fragments (A1, A2) de la zone d'intensité continue (KI) sont adjacents les uns aux autres et ne se chevauchent pas.

12. Procédé selon une des revendications de 2 à 10, **caractérisé en ce que** les fragments (A1, A2) de la zone d'intensité continue (KI) se chevauchent.

13. Procédé selon une des revendications de 1 à 12, **caractérisé en ce que** l'exécution réitérée des étapes de la transformation a lieu avec respectivement différents nombres de valeurs d'intensité discrètes (W1, W2) des zones d'intensité des signaux numériques (DS, DS1, DS2).

14. Procédé selon une des revendications de 1 à 13, **caractérisé en ce que** l'étape de la combinaison comprend les étapes partielles suivantes :
- estimation d'une valeur d'intensité discrète (W) pour chaque position discrète du signal numérique de structure papillaire (PS) à partir des valeurs d'intensité discrètes (W1, W2) respectives des positions discrètes conséquemment correspondantes des signaux numériques (DS, DS1, DS2) et
- enregistrement de la valeur d'intensité (W) estimée à la position discrète correspondante du signal numérique de structure papillaire (PS).

15. Procédé selon une des revendications de 2 à 12 avec revendication 14, **caractérisé en ce que** l'étape de la combinaison comprend, avant les étapes partielles de l'estimation et de l'enregistrement, l'étape partielle suivante :
- normalisation des zones d'intensité des signaux numériques (DS, DS1, DS2) sur le fragment (A1, A2) de la zone d'intensité continue (KI) saisi par le signal numérique respectif (DS, DS1, DS2).

16. Procédé selon la revendication 15, **caractérisé en ce que**, lors de l'étape de l'estimation, les seules valeurs d'intensité discrètes (W1, W2) des positions conséquemment correspondantes des signaux numériques (DS, DS1, DS2) prises en compte sont celles qui ne représentent pas de valeur d'intensité maximale ou minimale (W1, W2) du signal numérique respectif (DS, DS1, DS2).

17. Procédé selon une des revendications de 14 à 16, **caractérisé en ce que**, lors de l'étape de l'estimation, c'est la valeur arithmétique moyenne des valeurs d'intensité discrètes (W1, W2) des positions conséquemment correspondantes des signaux numériques (DS, DS1, DS2) qui est constituée lors de l'étape de l'estimation en tant que valeur d'intensité discrète (W) d'une position discrète du signal numérique de structure papillaire (PS).

18. Procédé selon une des revendications de 1 à 13, **caractérisé en ce que**, lors de l'exécution réitérée des étapes de la transformation, la zone d'intensité continue (KI) est reproduite sur des zones d'intensité des signaux numériques (DS, DS1, DS2) avec respectivement seulement deux valeurs d'intensité discrètes (W1, W2), une valeur seuil différente étant déterminée pour chaque signal numérique (DS, DS1, DS2) pour la division de la zone d'intensité continue (KI) en deux zones partielles qui sont respectivement reproduites sur une des deux valeurs d'intensité discrètes (W1, W2) de chaque signal numérique (DS, DS 1, DS2).

19. Procédé selon la revendication 18, **caractérisé en ce que**, lors de l'étape de la combinaison, les signaux numériques (DS, DS1, DS2) sont additionnés.

20. Procédé selon une des revendications de 1 à 17, **caractérisé en ce que**, lors de l'exécution réitérée des étapes de la transformation, par l'utilisation de capteurs de couleurs spéciaux qui saisissent séparément en bandes spectrales selon des couleurs de base à mélanger le spectre de la lumière visible en fonction d'espaces additifs ou soustractifs connus de couleurs, des signaux numériques de couleur (DS, DS 1, DS2) sont générés, à partir desquels un signal de couleur de structure papillaire (PS) est généré lors de l'étape de la combinaison.

21. Dispositif de digitalisation d'au moins une surface partielle de la structure papillaire de la peau, la surface partielle définissant un profil d'intensité (IP) à zone d'intensité continue (KI), comprenant un dispositif de transformation (TE) pour la transformation du profil d'intensité (IP) en un signal analogique électrique et un convertisseur analogique/numérique (AD) pour la transformation de ce signal analogique électrique en au moins un signal numérique (DS, DS1, DS2) ayant une zone d'intensité composée de valeurs d'intensité discrètes (W1, W2) et une zone spatiale composée de positions discrètes, **caractérisé en ce que** le dispositif comprend en outre :
un équipement de commande (SE) qui amène le dispositif de transformation (TE) et le convertisseur analogique/numérique (AD) à générer, pour la même surface partielle,
la transformation du profil d'intensité (IP) en un signal électrique analogique et
la transformation de ce signal électrique analogique en au moins un signal numérique (DS, DS1, DS2) avec une zone d'intensité (A1, A2) composée de valeurs d'intensité discrètes (W, W1, W2) et une zone spatiale composée de positions discrètes
plusieurs fois pour la même surface partielle pour constituer différents signaux numériques (DS, DS1, DS2) avec respectivement des discrétisations d'intensité (quantifications) différentes et
un équipement de combinaison (KE) qui combine les signaux numériques (DS, DS1, DS2) de manière à obtenir un signal numérique de structure papillaire commun (PS) ayant une zone d'intensité (D1) composée de valeurs d'intensité discrètes (W) et une zone spatiale composée de positions discrètes, de telle sorte que la zone d'intensité (D1) du signal numérique de structure papillaire (PS) présente davantage de valeurs d'intensité (W) discrètes que la zone d'intensité de chaque signal numérique distinct (DS, DS1, DS2).

22. Dispositif selon la revendication 21, **caractérisé en ce que**
l'équipement de commande (SE) détermine respectivement différents fragments (A1, A2) de la zone d'intensité continue (KI) du profil d'intensité (IP) devant être reproduits sur la zone d'intensité du signal numérique respectif (DS, DS1, DS2) et
l'équipement de combinaison (KE) combine les signaux numériques (DS, DS1, DS2) de telle façon que la zone d'intensité (D1) du signal numérique de structure papillaire (PS) saisit un plus grand fragment (A1, A2) de la zone d'intensité continue (KI) que la zone d'intensité de chaque signal numérique distinct (DS, DS1, DS2).

23. Dispositif selon la revendication 22, **caractérisé en ce qu'**un fragment (A1, A2) de la zone d'intensité continue (KI) du profil d'intensité (IP), fragment à reproduire déterminé par l'équipement de commande (SE), est reproduit sur le signal analogique électrique lors de la transformation du profil d'intensité (IP) par le dispositif de transformation (TE).

24. Dispositif selon la revendication 22 ou 23, **caractérisé en ce que** le dispositif de transformation (TE) est un convertisseur de signal capacitif.

25. Dispositif selon la revendication 22, **caractérisé en ce qu'**un fragment (A1, A2) de la zone d'intensité continue (KI) du profil d'intensité (IP), fragment à reproduire déterminé par l'équipement de commande (SE), est reproduit sur un signal numérique (DS, DS1, DS2) lors de la transformation du signal analogique électrique par le convertisseur analogique/numérique (AD).

26. Dispositif selon une des revendications de 22 à 25, **caractérisé en ce que** l'équipement de commande (SE) cafre les fragments (A1, A2) à reproduire de la zone d'intensité continue (KI) du profil d'intensité (IP) de telle façon qu'ils couvrent au total la totalité de la zone d'intensité continue (KI).

27. Dispositif selon une des revendications de 21 à 26, **caractérisé en ce que** l'équipement de commande (SE) détermine respectivement différents nombres de valeurs d'intensité discrètes (W1, W2) pour les zones d'intensité des signaux numériques (DS, DS1, DS2).

28. Dispositif selon une des revendications de 21 à 26, **caractérisé en ce que** l'équipement de combinaison (KE) estime, à partir des valeurs d'intensité discrètes (W1, W2) respectives des positions discrètes conséquemment correspondantes des signaux numériques (DS, DS 1, DS2), une valeur d'intensité discrète (W) pour chaque position discrète du signal numérique de structure papillaire (PS).

29. Dispositif selon une des revendications de 22 à 26 avec revendication 28, **caractérisé en ce que** l'équipement de combinaison (KE), avant l'estimation des valeurs d'intensité discrètes (W) du signal numérique de structure papillaire (PS), normalise les zones d'intensité des signaux numériques (DS, DS1, DS2) sur le fragment (A1, A2) de la zone d'intensité continue (KI) saisi par le signal numérique (DS, DS1, DS2) respectif.

30. Dispositif selon la revendication 29, **caractérisé en ce que**, lors de l'estimation des valeurs d'intensité discrètes (W) du signal numérique de structure papillaire (PS), les seules valeurs d'intensité (W1, W2) des positions discrètes conséquemment correspondantes des signaux numériques (DS, DS1, DS2) prises en compte par l'équipement de combinaison (KE) sont celles qui ne représentent ni la valeur d'intensité maximale, ni la valeur d'intensité minimale (W1, W2) de la zone d'intensité respective.

31. Dispositif selon une des revendications de 21 à 17, **caractérisé en ce que**
l'équipement de commande (SE) détermine pour chaque signal numérique (DS, DS1, DS2) des zones d'intensité n'ayant que deux valeurs d'intensité discrètes (W1, W2) et pour chaque signal numérique (DS, DS 1, DS2) une valeur seuil différente pour la division de la zone d'intensité continue (KI) en deux zones partielles, pour la reproduction d'une des zones partielles sur respectivement une des deux valeurs d'intensité discrètes (W1, W2) de chaque signal numérique (DS, DS1, DS2), et **en ce que**
l'équipement de combinaison (KE) additionne les signaux numériques (DS, DS1, DS2).

32. Dispositif selon une des revendications de 21 à 30, **caractérisé en ce que**
le dispositif de transformation (TE), en utilisant des capteurs de couleurs spéciaux qui saisissent séparément en bandes spectrales selon des couleurs de base à mélanger le spectre de la lumière visible en fonction d'espaces additifs ou soustractifs connus de couleurs, et le convertisseur analogique/numérique (AD) génèrent des signaux numériques de couleur (DS, DS1, DS2),
l'équipement de commande (SE) amène le dispositif de transformation (TE) et le convertisseur analogique/numérique (AD) à générer, pour la même surface partielle, des signaux numériques différents (DS, DS1, DS2), et
l'équipement de combinaison (KE) génère un signal numérique de couleur de structure papillaire (PS).
